# EUROPÄISCHE PATENTSCHRIFT

(11) **EP 3 772 787 B1**
(45) Veröffentlichungstag und Bekanntmachung des Hinweises auf die Patenterteilung: **10.04.2024**
(21) Anmeldenummer: 20186120.0
(22) Anmeldetag: 16.07.2020
(51) Int. Cl.: H02G 3/04, F16G 13/16, H02G 11/00

(54) **LEITUNGSFÜHRUNGSKANAL**
CABLE GUIDE CHANNEL
CANAL DE GUIDAGE DE CÂBLE

(30) Priorität: 06.08.2019 DE 102019121206
(43) Veröffentlichungstag der Anmeldung: 10.02.2021
(73) Patentinhaber: Knupfer, Peter, 72531 Hohenstein-Eglingen (DE)
(72) Erfinder: Knupfer, Peter, 72531 Hohenstein-Eglingen (DE)
(74) Vertreter: Christ, Niko

(56) Entgegenhaltungen:
- EP-A1- 2 975 717
- DE-A1- 19 703 410
- DE-A1-102005 010 985
- DE-A1-102008 010 340
- DE-U1-202009 005 650

## Beschreibung

Die vorliegende Erfindung betrifft einen Leitungsführungskanal, umfassend eine Mehrzahl gleichartiger Gliederkörper, welche in Leitungsrichtung beiderseits mit benachbarten Gliederkörpern gelenkig verbunden sind, wobei die Gliederkörper jeweils einen Rahmen ausbilden, welcher eine Leitungsführungsöffnung freihält und stabilisiert, und wobei jeder Rahmen einen im Wesentlichen rechteckigen Querschnitt aufweist, welcher aus einander gegenüberliegenden, jeweils zwei Gelenkachsen aufweisenden Schwenkflächen, die über einander gegenüberliegenden Spreizflächen miteinander verbunden sind, hergestellt ist, wobei sowohl die Schwenkflächen als auch die Spreizflächen benachbarter Gliederkörper einander überlappen, wobei die Spreizflächen gestuft sind und eine überlappende Stufe eines Gliederkörpers eine untergreifende Stufe eines benachbarten Gliederkörpers, unter Bildung einer bei jedem Biegungsgrad durchgehend geschlossenen Außenwand, zumindest teilweise verdeckt, und wobei die Spreizflächen der Gliederkörper im Wesentlichen S-förmig gebildet sind.

Ein solcher Leitungsführungskanal ist bereits aus der DE 20 2009 005650 U1 vorbekannt, bei der ein Anschlag für die Biegung in den Gelenkachsen realisiert wird. Hierbei besteht das Problem, dass ein seitlich herannahender Körper die Seitenflächen wegdrängen und in den Kabelführungskanal eindringen kann.

Ein ähnlicher Leitungsführungskanal ist bereits aus der DE 603 17 131 T2 vorbekannt. Dort ist ein Leitungsführungskanal aus einzelnen Gliedern beschrieben, bei dem die Glieder wie Puzzleteile in einer Kette ineinandergreifen. Dabei definieren die einzelnen Gliederkörper zwar einen Abstand zu den benachbarten Gliederkörpern, jedoch keinen festen Winkel. Vielmehr sind die vorgesehenen Verbindungselemente so geformt, dass eine Verschwenkung möglich ist. Die Konstruktion sieht dabei jedoch an den Wandungen eine Form vor, die nur in der engsten möglichen Krümmung des Leitungsführungskanals eine einigermaßen vollständige Abdichtung der Außenwand erlaubt. An der der Biegung gegenüberliegenden Außenwand treten im selben Moment größtmögliche Abstände der einzelnen Wandelemente zueinander auf.

Eine solche Lösung dient im Allgemeinen dazu, Kabel aufzunehmen und zu schützen, dabei dafür zu sorgen, dass die Kabel nicht ungeordnet herumliegen und stören oder beschädigt werden. Dies jedoch aufgrund der offenen Bauweise eher für den Bürobetrieb, wo zwar zahlreiche Kabel und Leitungen verlegt werden müssen, diese aber keinen großen Beeinträchtigungen ausgesetzt sind.

Auch aus der DE 203 01 298 U1 sind Kabelträger bekannt, die untereinander gelenkig verbunden sind, aber lediglich eine offene und zugängliche, aber mithin ungeschützte Kabelverlegung erlauben. Hier werden einzelne trogförmige und mithin nach oben offene Elemente miteinander kombiniert, indem diese über Gelenkverbinder zu einer Reihe aneinandergehängt werden.

Im Industriebereich hingegen müssen erheblich belastbarere Kabelkanäle verwendet werden. Hier ist es bekannt, Kabelkanäle aus Metall herzustellen, welche auch als vorgefertigte Lösungen angeboten werden. Problematisch ist hierbei allerdings besonders der Ausgleich lediglich geringer Abweichungen, also etwa ein seitlicher Versatz oder eine zu überwindende Steigung, Bodenwelle und dergleichen mehr. Vorgefertigte Lösungen können hier nur in Ergänzung mit teuren Spezialanfertigungen effektiv eingesetzt werden. Auch die DE 203 07 765 U1 stellt einen solchen Kabelkanal dar, der zwar ausreichend stabil, dafür aber unflexibel ist.

Des Weiteren ist aus dem Stand der Technik die DE 10 2008 010340 A1 vorbekannt, welche eine Biegung nur in eine Richtung erlaubt und dadurch ebenfalls unflexibel einsetzbar ist. Lediglich aufgrund eines Anschlags auf einer Seite kann eine Spreizung auf der anderen Seite begrenzt werden, so dass ein mechanisches Eindringen in diese Seiten im Einbauzustand möglich ist.

Einen deutlichen Kontrast hierzu stellt die Wo 97/40564 A1 dar. Dort werden die zu verlegenden Leitungen mehr oder weniger Lose über dem Boden oder im Abstand zu Wänden verlegt, indem torähnliche Traggestelle entlang einer Kabeltrasse aufgestellt werden und die Kabel in einer Tragmulde dieser Gestelle verlegt werden. Zwar ist dieses System ausgesprochen flexibel, da die einzelnen Traggestelle nicht miteinander verbunden sondern völlig frei platziert sind, jedoch stellt dies auch eine vollkommen ungeschützte Verlegung der Leitungen dar.

Vor diesem Hintergrund liegt der vorliegenden Erfindung die Aufgabe zu Grunde, einen Leitungsführungskanal zu schaffen, der gleichzeitig eine flexible Verlegung ermöglicht und einen hochwertigen Schutz der in ihm verlegten Kabel auch im Industriebereich gewährleistet.

Dies gelingt durch einen Leitungsführungskanal gemäß den Merkmalen des Anspruchs 1. Weitere, sinnvolle Ausgestaltungen eines solchen Leitungsführungskanals können den sich hieran anschließenden, abhängigen Ansprüchen entnommen werden.

Erfindungsgemäß ist vorgesehen, dass ein Leitungsführungskanal aus einzelnen Gliederkörpern besteht. Diese Gliederkörper sind allseitig überlappend gestaltet, so dass eine in jedem Biegungszustand des Leitungsführungskanals eine durchgängige Außenwand gewährleistet ist. Die einzelnen Gliederkörper sind im Wesentlichen als rechteckiger, breiter Rahmen aufgebaut, der aus zwei gegenüberliegenden Schwenkflächen besteht, die über zwei Spreizflächen miteinander verbunden sind. Grundsätzlich erlauben die Gliederkörper ein Verschwenken um eine senkrecht durch die Schwenkflächen hindurch verlaufende Gelenkachse, während die Spreizflächen so geformt sind, dass sie mit den Spreizflächen benachbarter Gliederkörper in einer Art und Weise überlappen, dass auch bei einer größtmöglichen Aufspreizung der so gebildeten Außenwand die Überlappung erhalten bleibt. Hierbei ist nicht vorgesehen, dass die Außenwand etwa dicht wäre, sondern vielmehr dass ein außen herabfallender Gegenstand nicht ohne Weiteres in den Leitungsführungskanal eindringen kann. Es ist mithin ausreichend, wenn die Sichtlinie auf den Innenraum durch die Bestandteile der Gliederkörper verstellt ist.

Dies wird erfindungsgemäß dadurch bewerkstelligt, dass die Spreizflächen gestuft sind, also wenigstens zwei zueinander parallel versetzte Ebenen aufweisen, von denen die jeweils äußeren, überlappenden Stufen eines Gliederkörpers die innenliegenden, untergreifenden Stufen eines benachbarten Gliederkörpers verdecken. Hierdurch entsteht eine bei jedem gewählten Biegungsgrad durchgehend geschlossene Außenwand des Leitungsführungskanals, so dass aufgrund der Möglichkeit, Biegungen zu verlegen und aufgrund der durchgehenden Außenwand ein gleichermaßen flexibler wie widerstandsfähiger Leitungsführungskanal entsteht.

Da ein besonderes Augenmerk des Kanals auf der Stabilität liegt, ist das bevorzugte Material für dessen Herstellung Metall, also insbesondere Eisen, Stahl, je nach Anforderung gegebenenfalls Aluminium oder auch Edelstahl. Prinzipiell kann ein erfindungsgemäßer Leitungsführungskanal aber auch unter Beibehaltung sämtlicher Vorteile aus anderen Materialien wie Kunststoffen hergestellt werden.

Bei den Leitungsführungskanälen kann im Wesentlichen zwischen zwei Arten unterschieden werden, nämlich zum Einen diejenigen Kanäle, welche einen seitlichen Versatz ermöglichen, zum Anderen diejenigen Kanäle, die eine Biegung auf- und abwärts vorsehen. Diese bestehen zwar aus den gleichen Grundelementen, es muss jedoch deren Ausrichtung berücksichtigt werden.

So wird bei einem seitlich biegsamen Kanal ein Basiselement aus mehreren Schwenkflächen zusammengesetzt, während die seitlichen Wände aus Spreizflächen bestehen. Zur Herstellung eines Deckelelements, das auf das Basiselement aufgesetzt werden kann, können bei jedem einzelnen Gliederkörper die Spreizflächen mit einer Schwenkfläche verbunden, etwa verschweißt sein, gegebenenfalls auch durch Biegen aus der Schwenkfläche einstückig hergestellt werden. Soweit die Gliederkörper aus Kunststoff bestehen, werden Deckelelement und Basiselement gleich passend, etwa im Spritzgussverfahren, geformt. Deckelelement und Basiselement können vorzugsweise lösbar miteinander verbunden werden, so dass zunächst das Basiselement am Boden oder an der Wand oder der Decke verlegt und das Deckelelement aus mehreren Teilen daran befestigt wird.

Zur weiteren Organisation der in dem Leitungsführungskanal verlegten Leitungen kann je Gliederkörper ein Trennwandabschnitt mittig vorgesehen sein, der mit den Schwenkflächen verbunden ist oder an den Gelenkachsen befestigt wird.

Im Fall eines Leitungsführungskanals, dessen Gelenkachse durch die Seitenwände hindurchverläuft, ist die Funktionsverteilung etwas anders. Hier besteht das Basiselement aus Spreizflächen und das Deckelelement aus Spreizflächen, die von Schwenkflächen flankiert sind. Entsprechend haben die Spreizflächen und die Schwenkflächen in den genannten beiden Ausführungsformen unterschiedliche Formgestaltungen.

Entsprechend kann ein Trennwandabschnitt auch hier mittig vorgesehen sein, dieser ist dann aber entweder ausschließlich mit den Spreizflächen verbunden oder es gibt eine zusätzliche Verbindung zwischen den Trennwandabschnitten.

Die Verbindung zwischen dem Deckelelement und dem Basiselement kann auf unterschiedliche Weise realisiert sein. So besteht eine einfache Möglichkeit darin, eine Steck- oder Klemmverbindung herzustellen, indem das Basiselement ein Verbindungselement und das Deckelelement ein Gegenstück dazu aufweist. Es kann sich hierbei aber auch um eine Fügeverbindung oder eine Verschraubung oder gar Vernietung handeln, letzteres in dem Fall dass ein Öffnen nicht mehr beabsichtigt wird. Im Allgemeinen empfiehlt sich aber eine lösbare Verbindung zu wählen, um die Kabelverlegung innerhalb des Leitungsführungskanals beizeiten zu ändern.

Um eine besonders gute und flexible Abdichtung an den Spreizflächen zu erhalten, können diese im Wesentlichen S-förmig gebildet sein. Dies erlaubt in besonderem Maße die Bildung einer überlappenden Stufe und einer untergreifenden Stufe. Die Enden der S-Form können dann als Anschläge für einen maximalen Biegungsgrad eingesetzt werden.

Die vorstehende Erfindung wird im Folgenden anhand eines Ausführungsbeispiels näher erläutert.

Es zeigen
- Figur 1: ein einzelnes Deckelement eines erfindungsgemäßen Leitungsführungskanals in einer Draufsicht von oben,
- Figur 2: ein Basiselement des Leitungsführungskanals in einer Draufsicht von oben,
- Figur 3: eine zweite Ausführungsform eines Leitungsführungskanals zum Ausgleich eines Höhenversatzes, jedoch in langgestrecktem Zustand in perspektivischer Darstellung von schräg oben,
- Figur 4: ein einzelnes Deckelement eines Leitungsführungskanals gemäß Figur 3 in einer Draufsicht von oben,
- Figur 5: der Leitungsführungskanal gemäß Figur 3 in seitwärts gebogenem Zustand in perspektivischer Darstellung von schräg oben, sowie
- Figur 6: ein Basiselement des in Figur 5 dargestellten Leitungsführungskanals in einer Draufsicht von oben.

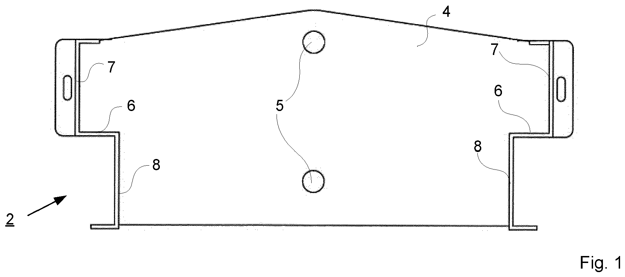

Figur 1 zeigt ein Element eines Leitungsführungskanals 1, der aus einer Vielzahl von gleichartigen Gliederkörpern 2 aufgebaut ist. Die Gliederkörper 2 bilden jeweils einen Rahmen 3, der eine Kabeldurchführöffnung umgibt und diese gegen äußere Einwirkungen absichert. Jeder Gliederkörper 2 besteht dafür aus zwei Schwenkflächen 4, im vorliegenden Fall oben und unten, sowie zwei S-förmigen Spreizflächen 6 zu beiden Seiten des Leitungsführungskanals 1. Mehrere Gliederkörper 2 sind in einer Reihe miteinander verbunden, indem jeweils benachbarte Gliederkörper 2 über eine Gelenkachse 5 einander angelenkt sind. Auf diese Weise ist ein seitliches Verdrehen der einzelnen Gliederkörper 2 gegeneinander möglich, so dass eine Freiform-Verlegung des Leitungsführungskanals 1in der Ebene erfolgen kann. Zur besseren Verlegung der Leitungen innerhalb dieses Leitungsführungskanals 1 ist ein Basiselement 10 vorgesehen, das zunächst auf dem Boden aufgestellt und verlegt wird. Darauf können direkt die Kabel verlegt und dann das Deckelelement 9 daraufgesetzt werden. Selbstverständlich ist es auch möglich und kann vorteilhaft sein, das trogförmige Deckelelement 9 zunächst zu verlegen und das Basiselement 10 darauf zu platzieren.

Ein solcher Leitungsführungskanal 1 ist aus mehreren gleichartigen Gliederkörpern 2 aufgebaut. Ein solcher einzelner Gliederkörper 2 ist in der Figur 1 ohne Basiselement 10, also als einzelnes Deckelelement 9, dargestellt. Dieses umfasst eine Schwenkfläche 4, in der zwei Gelenkachsen 5 vorgesehen sind.

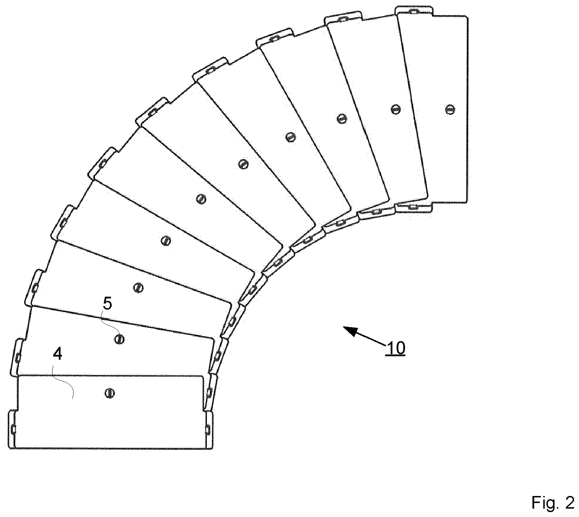

Diese dienen jeweils zur Verbindung mit einem weiteren benachbarten Gliederkörper 2. Die aus der Betrachtungsebene herausragenden Spreizflächen 6 sind stufig aufgebaut und unterteilt in jeweils eine überlappende Stufe 7 und eine untergreifende Stufe 8. Bei mehreren zusammengesetzten Gliederkörpern 2 greift eine untergreifende Stufe 8 unter eine überlappende Stufe 7 des benachbarten Gliederkörpers 2 und umgekehrt. Das freie Ende der überlappenden Stufe 7 bewegt sich dabei in der Hinterschneidung der untergreifenden Stufe 8, während das freie Ende der untergreifenden Stufe 8 in der Aufwölbung der überlappenden Stufe 7 gelagert ist. Wie in Figur 2 gezeigt, können die freien Enden der S-förmig gebildeten Spreizflächen 6 einen gegenseitigen Anschlag bilden und stellen damit sicher, dass das Innere des Leitungsführungskanals stets vollständig abgeschirmt, die Außenwand durchgehend gebildet ist.

Dies erlaubt eine starke Biegung des Leitungsführungskanals 1. Es ist erkennbar, dass die Spreizwände 6 auf der Innenflanke der Biegung so eng gestellt sind, dass nur noch die überlappenden Stufen 7 zu sehen sind, während auf der Außenflanke sowohl die überlappenden Stufen 7 als auch dazwischen die untergreifenden Stufen 8 ganz zu sehen sind. Jedoch eröffnet die Außenwand des Leitungsführungskanals 1 dennoch an keiner Stelle einen Zugriff auf sein Inneres, außer durch die Leitungsführungsöffnung vorne und hinten.

Deutlicher können die Überlappungen in der Figur 2 erkannt werden, wo der Leitungsführungskanal 1 ohne Deckelelement 9 dargestellt ist. Die Verkürzung auf der Innenflanke steht der vollständigen Spreizung auf der Außenflanke gegenüber.

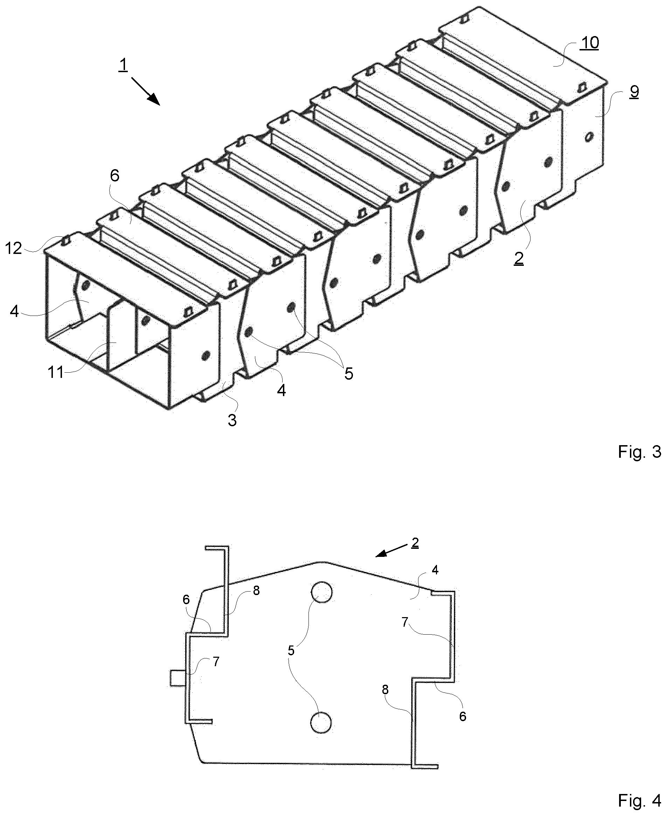

Figur 3 zeigt eine zweite Ausführungsform des Leitungsführungskanals 1, bei dem ein Ausgleich von Höhenunterschieden vorgesehen ist. Daher liegt der Leitungsführungskanal 1 in dieser Ausgestaltungsform auch auf einer Spreizfläche 6, während seitlich die Schwenkflächen 4 gelegen sind. Auch hier ist in gleicher Art und Weise zu erkennen, dass die stufige Gestaltung der Spreizflächen 6 eine rundum geschlossene Außenwand ermöglichen. Eine Verbindung zwischen einem Deckelelement 9 und einem Basiselement 10 kann auch hier mithilfe einer geeigneten Verbindung 12 erfolgen. Ein mittlerer Trennwandabschnitt 11 kann mit dem jeweiligen Deckelelement 9 verbunden sein, eine Verbindung kann bei dieser Ausführungsform aber ebenfalls über eine Gelenkachse unter den verschiedenen Trennwandabschnitten erfolgen.

Figur 4 zeigt einen einzelnen Gliederkörper 2 dieser zweiten Ausführungsform, wobei auch hier zeichnerisch auf ein Basiselement 10 verzichtet wurde. Im Unterschied zur ersten Ausführungsform sind die S-förmigen Spreizwände hier gleichsinnig aber versetzt aufgestellt, während sie bei der ersten Ausführungsform spiegelbildlich angeordnet sind.

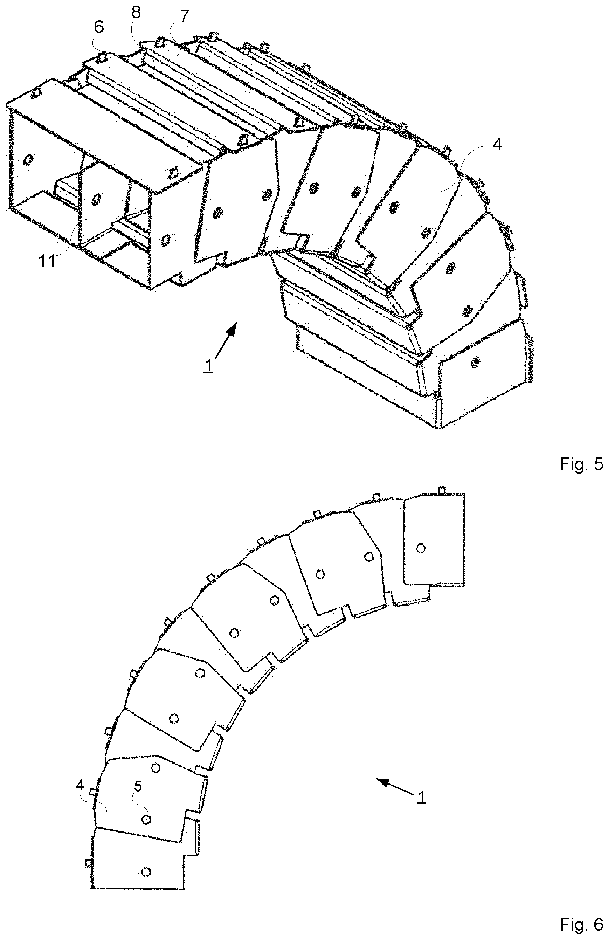

Figur 5 zeigt den Leitungsführungskanal 1 gemäß Figur 3 nunmehr mit einer Krümmung, aus der sich auch hier erkennen lässt, dass auf der Innenflanke der Krümmung die untergreifenden Stufen vollständige verdeckt werden, während auf der Außenflanke sowohl die überlappenden Stufen 7 als auch die untergreifenden Stufen 8 vollständig sichtbar sind. Eine Öffnung in der Außenwand ist auch hier nicht vorhanden. Auch dies lässt sich wiederum in der Figur 8 besonders deutlich beobachten.

Vorstehend beschrieben ist somit ein Leitungsführungskanal, der gleichzeitig eine flexible Verlegung ermöglicht und einen hochwertigen Schutz der in ihm verlegten Kabel auch im Industriebereich gewährleistet.

### BEZUGSZEICHENLISTE

- 1: Leitungsführungskanal
- 2: Gliederkörper
- 3: Rahmen
- 4: Schwenkfläche
- 5: Gelenkachse
- 6: Spreizfläche
- 7: überlappende Stufe
- 8: untergreifende Stufe
- 9: Deckelelement
- 10: Basiselement
- 11: Trennwandabschnitt
- 12: Verbindung

## Patentansprüche

1. Leitungsführungskanal, umfassend eine Mehrzahl gleichartiger Gliederkörper (2), welche in Leitungsrichtung beiderseits mit benachbarten Gliederkörpern (2) gelenkig verbunden sind, wobei die Gliederkörper (2) jeweils einen Rahmen (3) ausbilden, welcher eine Leitungsführungsöffnung freihält und stabilisiert, und wobei jeder Rahmen (3) einen im Wesentlichen rechteckigen Querschnitt aufweist, welcher aus einander gegenüberliegenden, jeweils zwei Gelenkachsen (5) aufweisenden Schwenkflächen (4), die über einander gegenüberliegenden Spreizflächen (6) miteinander verbunden sind, hergestellt ist,
wobei sowohl die Schwenkflächen (4) als auch die Spreizflächen (6) benachbarter Gliederkörper (2) einander überlappen, wobei die Spreizflächen (6) gestuft sind und eine überlappende Stufe (7) eines Gliederkörpers (2) eine untergreifende Stufe (8) eines benachbarten Gliederkörpers (2), unter Bildung einer bei jedem Biegungsgrad durchgehend geschlossenen Außenwand, zumindest teilweise verdeckt, und wobei die Spreizflächen (6) der Gliederkörper (2) im Wesentlichen S-förmig gebildet sind,
**dadurch gekennzeichnet, dass** die Enden der S-Form als Anschläge für einen maximalen Biegungsgrad einsetzbar sind, so dass die freien Enden benachbarter S-förmig gebildeter Spreizflächen (6) einen gegenseitigen Anschlag bilden.

2. Leitungsführungskanal gemäß Anspruch 1, **dadurch gekennzeichnet, dass** die Gliederkörper (2) aus Metall oder Kunststoff hergestellt sind.

3. Leitungsführungskanal gemäß Anspruch 2, **dadurch gekennzeichnet, dass** die Spreizflächen (6) durch Biegen oder Verbinden mit einer die Sichtseite bildenden Schwenkfläche (4) hergestellt sind und so ein Deckelelement (9) bilden, das lösbar mit der zweiten, ein Basiselement (10) bildenden Schwenkfläche (4) verbunden ist.

4. Leitungsführungskanal gemäß Anspruch 3, **dadurch gekennzeichnet, dass** den Gliederkörpern (2) jeweils ein Trennwandabschnitt (11) mittig zugeordnet ist, welcher direkt mit den Schwenkflächen (4) oder mit den Gelenkachsen (5) verbunden ist.

5. Leitungsführungskanal gemäß Anspruch 2, **dadurch gekennzeichnet, dass** die Schwenkflächen (4) durch Biegen oder Verbinden mit einer die Sichtseite bildenden Spreizfläche (6) hergestellt sind und so ein Deckelelement (9) bilden, das lösbar mit der zweiten, ein Basiselement (10) bildenden Spreizfläche (6) verbunden ist.

6. Leitungsführungskanal gemäß Anspruch 5, **dadurch gekennzeichnet, dass** den Gliederkörpern (2) jeweils ein Trennwandabschnitt (11) mittig zugeordnet ist, welcher entweder ausschließlich mit den Spreizflächen (6) oder zusätzlich mit den jeweils benachbarten Trennwandabschnitten (11) verbunden ist.

7. Leitungsführungskanal gemäß einem der vorhergehenden Ansprüche, **dadurch gekennzeichnet, dass** die Verbindung (12) zwischen Deckelelement (9) und Basiselement (10) durch eine Steckverbindung, Klemmverbindung oder Schraubverbindung, durch Fügen oder unter Verwendung von Verbindungsmitteln erfolgt.

8. Leitungsführungskanal gemäß einem der vorhergehenden Ansprüche, **dadurch gekennzeichnet, dass** einander überlappende Spreizflächen (6) miteinander zusammenwirkende Anschläge aufweisen.

## Claims

1. A cable guide channel, comprising a plurality of similar link bodies (2) which are hingedly connected on both sides to adjacent link bodies (2) in the direction of the cable, wherein the link bodies (2) each form a frame (3) keeping clear and stabilizing a cable guide opening, and wherein each frame (3) has a substantially rectangular cross-section which is made up from opposing pivoting surfaces (4), each having two hinge axes (5), which are connected to one another via opposing spreading surfaces (6),
wherein both the pivoting surfaces (4) and the spreading surfaces (6) of adjacent link bodies (2) overlap one another, the spreading surfaces (6) being stepped and an overlapping step (7) of a link body (2) at least partially covering an underlapping step (8) of an adjacent link body (2), thus forming an outer wall, which is continuously closed at any degree of bending, and wherein the spreading surfaces (6) of the link bodies (2) are substantially S-shaped,
**characterized in that** the ends of the S-shape can be used as stops for a maximum degree of bending, so that the free ends of adjacent S-shaped spreading surfaces (6) form a mutual stop.

2. The cable guide channel according to claim 1, **characterized in that** the link bodies (2) are made of metal or plastic.

3. The cable guide channel according to claim 2, **characterized in that** the spreading surfaces (6) are produced by bending or connecting to a pivoting surface (4) forming the visible side and thus form a cover element (9) which is releasably connected to the second pivoting surface (4) forming a base element (10).

4. The cable guide channel according to claim 3, **characterized in that** the link bodies (2) are each assigned a centrally arranged partition wall section (11), which is connected directly to the pivoting surfaces (4) or to the hinge axes (5).

5. The cable guide channel according to claim 2, **characterized in that** the pivoting surfaces (4) are produced by bending or connecting to a spreading surface (6) forming the visible side and thus form a cover element (9) which is releasably connected to the second spreading surface (6) forming a base element (10).

6. The cable guide channel according to claim 5, **characterized in that** the link bodies (2) are each assigned a centrally arranged partition wall section (11), which is connected either exclusively to the spreading surfaces (6) or additionally to the respective adjacent partition wall sections (11).

7. The cable guide channel according to any one of the preceding claims, **characterized in that** the connection (12) between the cover element (9) and the base element (10) is made by a plug-in connection, a clamp connection or screw connection, by joining or using connecting means.

8. The cable guide channel according to any one of the preceding claims, **characterized in that** overlapping spreading surfaces (6) have mutually cooperating stops.

## Revendications

1. Un canal de guidage de câble, comprenant une pluralité de corps de liaison similaires (2) qui sont reliés de manière articulée des deux côtés aux corps de liaison adjacents (2) dans la direction du câble, dans lequel les corps de liaison (2) forment chacun un cadre (3) maintenant dégagé et stabilisant une ouverture de guidage de câble, et dans lequel chaque cadre (3) a une section transversale sensiblement rectangulaire qui est constituée de surfaces pivotantes opposées (4), ayant chacune deux axes d'articulation (5), qui sont reliées l'une à l'autre par des surfaces d'écartement opposées (6),
dans lequel les surfaces pivotantes (4) et les surfaces d'écartement (6) des corps de liaison (2) adjacents se chevauchent, les surfaces d'écartement (6) étant étagées et une marche de chevauchement (7) d'un corps de liaison (2) recouvrant au moins partiellement une marche de chevauchement par le bas (8) d'un corps de liaison adjacent (2), formant ainsi une paroi extérieure, qui est continuellement fermée à tout degré de flexion, et dans laquelle les surfaces d'écartement (6) des corps de liaison (2) sont sensiblement en forme de S,
**caractérisé en ce que** les extrémités de la forme en S peuvent être utilisées comme butées pour un degré maximal de flexion, de sorte que les extrémités libres des surfaces d'écartement (6) adjacentes en forme de S forment une butée mutuelle.

2. Le canal de guidage de câble selon la revendication 1, **caractérisé en ce que** les corps de liaison (2) sont en métal ou en plastique.

3. Le canal de guidage de câble selon la revendication 2, **caractérisé en ce que** les surfaces d'écartement (6) sont produites par pliage ou connexion à une surface pivotante (4) formant la face visible et formant ainsi un élément de couverture (9) qui est relié de manière amovible à la seconde surface pivotante (4) formant un élément de base (10).

4. Le canal de guidage de câble selon la revendication 3, **caractérisé en ce qu'**une section de paroi de séparation (11) disposée au centre est assignée à chacun des corps de liaison (2), qui est reliée directement aux surfaces pivotantes (4) ou aux axes d'articulation (5).

5. Le canal de guidage de câble selon la revendication 2, **caractérisé en ce que** les surfaces pivotantes (4) sont produites par pliage ou connexion à une surface d'écartement (6) formant la face visible et formant ainsi un élément de couverture (9) qui est relié de manière amovible à la seconde surface d'écartement (6) formant un élément de base (10).

6. Le canal de guidage de câble selon la revendication 5, **caractérisé en ce qu'**une section de paroi de séparation (11) disposée au centre est assignée à chacun des corps de liaison (2), qui est reliée soit exclusivement aux surfaces d'écartement (6), soit en plus aux sections de paroi de séparation adjacentes respectives (11).

7. Le canal de guidage de câble selon l'une des revendications précédentes, **caractérisé en ce que** la connexion (12) entre l'élément de couverture (9) et l'élément de base (10) est réalisée par une connexion par enfichage, une connexion par serrage ou une connexion à vis, par assemblage ou à l'aide de moyens de connexion.

8. Le canal de guidage de câble selon l'une des revendications précédentes, **caractérisé en ce que** les surfaces d'écartement (6) qui se chevauchent ont des butées qui coopèrent mutuellement.
